# EUROPEAN PATENT APPLICATION

(11) **EP 4 822 827 A1**
(43) Date of publication of application: **14.10.2026**
(21) Application number: 26166387.6
(22) Date of filing: 20.03.2026
(51) Int. Cl.: H01M 10/625, H01M 10/647, H01M 10/653, H01M 10/6551, H01M 10/6554, H01M 50/103, H01M 50/169, H01M 50/209, H01M 50/249, H01M 50/293

(54) **BATTERY PACK AND METHOD OF MANUFACTURING BATTERY PACK**

(30) Priority: 26.03.2025 JP 2025052541
(71) Applicant: Toyota Jidosha Kabushiki Kaisha, Toyota-shi, Aichi-ken 471-8571 (JP); AISAN KOGYO KABUSHIKI KAISHA, Obu-shi, Aichi 474-8588 (JP)
(72) Inventor: MATSUI, Takaaki, Toyota-shi, 471-8571 (JP); KATSUMOTO, Taichi, Toyota-shi, 471-8571 (JP); KOKUBO, Akinori, Toyota-shi, 471-8571 (JP); FUKUI, Akihiro, Obu-shi, 474-8588 (JP); KUSANO, Hiroshi, Shibuya-ku, 150-8554 (JP)
(74) Representative: J A Kemp LLP

(57) **Abstract**

A battery pack includes: at least one battery cell 43 including an electrode body 48 and a cell case 44 that includes a bottom wall portion 45 disposed below the electrode body 48 and a front wall portion 46F and a rear wall portion 46R disposed in a longitudinal direction of the electrode body 48; a battery case that houses the at least one battery cell 43; and a thermally conductive material 60 that is adhered to the bottom wall portion 45 and a bottom plate portion 26, which is the bottom portion of the battery case, the thermally conductive material 60 being deformable. The thickness of the bottom wall portion 45 is greater than the thickness of the front wall portion 46F and the rear wall portion 46R.

## Description

### BACKGROUND

### Technical Field

The present disclosure relates to a battery pack and a method of manufacturing a battery pack.

### Related Art

Japanese Patent Application Laid-Open (JP-A) No. 2024-38070 discloses a battery pack including a battery case in which plural battery cells laminated in a predetermined direction are housed. In the battery cells disclosed in Japanese Patent Application Laid-Open (JP-A) No. 2024-38070, an electrode terminal is drawn out from a first end portion and a second end portion.

Incidentally, the bottom portion of the battery case and the bottom portion of each battery cell may be fixed via a thermally conductive material that is an adhesive having good thermal conductivity. As a result, it is possible to transmit the heat of each battery cell to the battery case via the thermally conductive material, thereby suppressing the temperature of each battery cell from increasing.

However, since the battery cells may expand upon charging/discharging, the bottom portion of a cell case may deform. In this case, the thermally conductive material cannot conform to the deformation of the bottom portion of the cell case, and the thermally conductive material may separate from the bottom portion of the cell case, whereby the heat of each battery cell may not be dissipated.

### SUMMARY

In consideration of the above-described circumstances, an object of the present disclosure is to provide a battery pack and a method of manufacturing a battery pack, which can suppress an increase in temperature of a battery cell using a thermally conductive material provided between a first bottom portion of the battery cell and a second bottom portion of a battery case.

### Means for Solving the Problem

A battery pack according to a first aspect includes: at least one battery cell including an electrode body and a cell case that includes a first bottom portion disposed below the electrode body and a side portion disposed in a longitudinal direction of the electrode body; a battery case that houses the at least one battery cell; and a thermally conductive material that is adhered to the first bottom portion and a second bottom portion, which is a bottom portion of the battery case, wherein a thickness of the first bottom portion is greater than a thickness of the side portion.

In the battery pack according to the first aspect, the thickness of the first bottom portion of the cell case is greater than the thickness of the side portion of the cell case. In this manner, by making the thickness of the first bottom portion thick, the rigidity of the first bottom portion is improved. As a result, deformation of the first bottom portion is suppressed. Therefore, separation of the first bottom portion and the thermally conductive material can be suppressed. Accordingly, it is possible to suppress an increase in the temperature of the battery cell by using the thermally conductive material that is provided between the first bottom portion of the battery cell and the second bottom portion of the battery case.

A battery pack according a second aspect is the battery pack according to the first aspect, wherein the cell case includes: a first member that is provided with an opening in at least one of an upper direction, a lower direction or a lateral direction, in a cross-section orthogonal to the longitudinal direction; and a second member that closes the opening of the first member.

In the battery pack according to the second aspect, the first member is provided with an opening in at least one of an upper direction, a lower direction or a lateral direction, in a cross-section orthogonal to the longitudinal direction. The opening in the cross-section orthogonal to the longitudinal direction can be formed so as to extend in the longitudinal direction, whereby a relatively large opening can easily be obtained. Therefore, since the electrode body can be housed at an interior of the cell case via the large opening, the electrode body can be easily housed.

Furthermore, in the battery pack according to the second aspect, the cell case includes two members, that is, a first member and a second member. As a result, for example, the thickness of the first bottom portion of the cell case can be increased by overlapping the two members (the first member and the second member). In this manner, the degree of freedom in design can be improved, whereby the thickness of the first bottom portion can easily be increased.

A battery pack according to a third aspect is the battery pack according to the second aspect, wherein the first member has an L-shape in the cross-section.

In the battery pack according to the third aspect, the first member has an L-shape. As a result, the opening of the first member is provided in two directions among upward, downward, and laterally. Therefore, the electrode body can easily be housed in the first member as compared to a case in which the opening is provided only in one direction.

A battery pack according to fourth aspect is the battery pack according to the second aspect or the third aspect, wherein, at the first bottom portion of the cell case, the first member and the second member overlap with each other in an up-down direction.

In the battery pack according to the fourth aspect, at the first bottom portion of the cell case, the first member and the second member overlap with each other in the up-down direction. In this manner, the thickness of the first bottom portion can be increased by overlapping the first member and the second member. As a result, even in a case in which the thickness of the first member and the thickness of the second member are uniform, the thickness of the first bottom portion can be increased. Therefore, even if the thickness of part of the first member or a part of the second member is not changed, the thickness of the first bottom portion can be increased, whereby the thickness of the first bottom portion can easily be increased.

A battery pack according to a fifth aspect is the battery pack according to the second aspect or the third aspect, wherein the first member or the second member integrally includes, at the first bottom portion of the cell case, a first overlapping portion and a second overlapping portion that overlaps with the first overlapping portion in an up-down direction.

In the battery pack according to the fifth aspect, the first member or the second member integrally includes, at the first bottom portion of the cell case, the first overlapping portion and the second overlapping portion that overlaps with the first overlapping portion in the up-down direction. In this manner, the thickness of the first bottom portion can be increased by overlapping the first overlapping portion and the second overlapping portion. As a result, even in a case in which the thickness of the first member and the thickness of second member are uniform, the thickness of the first bottom portion can be increased. Therefore, even if the thickness of a part of the first member or a part of the second member is not changed, the thickness of the first bottom portion can be increased, whereby the thickness of the first bottom portion can easily be increased.

A battery pack according to a sixth aspect is the battery pack according to any one of the second aspect to the fifth aspect, wherein a welded portion, which fixes the first member and the second member, is provided at the first member and the second member.

In the battery pack according to the sixth aspect, a welded portion, which fixes the first member and the second member, is provided at the first member and the second member. As a result, the first member and the second member can be securely fixed.

A method of manufacturing a battery pack according to a seventh aspect is a method of manufacturing the battery pack according to any one of the first aspect to the sixth aspect, the method including: housing the electrode body at an interior of a first member that is provided with an opening in at least one of an upper direction, a lower direction or a lateral direction in a cross-section orthogonal to the longitudinal direction and that is included in the cell case, via the opening; and attaching a second member, which is included in the cell case, to the first member in a state in which the electrode body is housed in the first member, so as to close the opening.

In the method of manufacturing a battery pack according to the seventh aspect, the method includes housing the electrode body at an interior of a first member that is provided with an opening in at least one of an upper direction, a lower direction or a lateral direction in a cross-section orthogonal to the longitudinal direction and that is included in the cell case, via the opening. The opening in the cross-section orthogonal to the longitudinal direction can be formed so as to extend in the longitudinal direction, whereby a relatively large opening can easily be obtained. Therefore, since the electrode body can be housed at an interior of the cell case via the large opening, the electrode body can be easily housed.

As described above, the battery pack and the method of manufacturing a battery pack according to the present disclosure have an excellent effect in that it is possible to suppress an increase in the temperature of a battery cell using a thermally conductive material that is provided between a first bottom portion of the battery cell and a second bottom portion of a battery case.

### BRIEF DESCRIPTION OF THE DRAWINGS

Exemplary embodiments of the present invention will be described in detail based on the following figures, wherein:
Fig. 1 is a cross-sectional view of a vehicle at which a battery pack according to a first exemplary embodiment has been installed, taken at the center in a vehicle width direction.
Fig. 2 is a schematic exploded perspective view of the battery pack.
Fig. 3 is a schematic exploded perspective view of a lower case of a battery case, and a battery module.
Fig. 4 is a schematic front view of a battery cell, a thermally conductive material, and a bottom plate of the lower case.
Fig. 5 is a schematic cross-sectional view taken along line 5-5 in Fig. 4.
Fig. 6 is a schematic bottom view of the battery cell.
Fig. 7 is a schematic cross-sectional view of the battery cell taken along line 5-5 in Fig. 4 when the battery cell expands.
Fig. 8 is a schematic longitudinal cross-sectional view of a cell case.
Fig. 9 is a schematic exploded longitudinal cross-sectional view of the cell case.
Fig. 10 is a schematic longitudinal cross-sectional view of a cell case according to a second exemplary embodiment.
Fig. 11 is a schematic longitudinal cross-sectional view of a cell case according to a modified example of the second exemplary embodiment.
Fig. 12 is a schematic longitudinal cross-sectional view of a cell case according to a third exemplary embodiment.
Fig. 13 is a schematic longitudinal cross-sectional view of a cell case according to a fourth exemplary embodiment.
Fig. 14 is a schematic longitudinal cross-sectional view of a cell case according to a fifth exemplary embodiment.
Fig. 15 is a schematic cross-sectional view taken along line 15-15 of Fig. 14.

### DETAILED DESCRIPTION

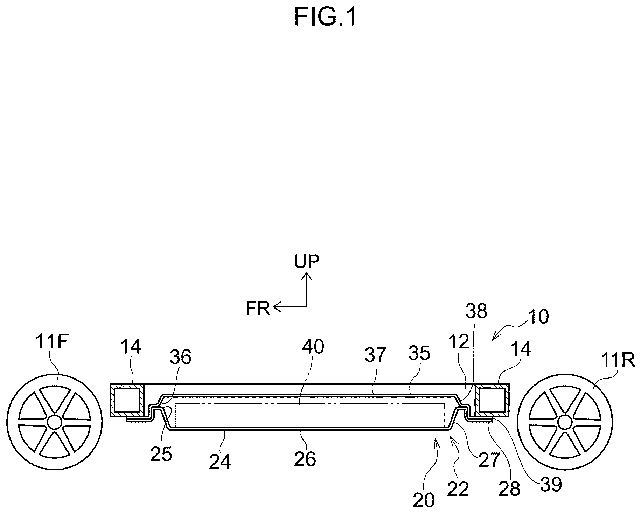

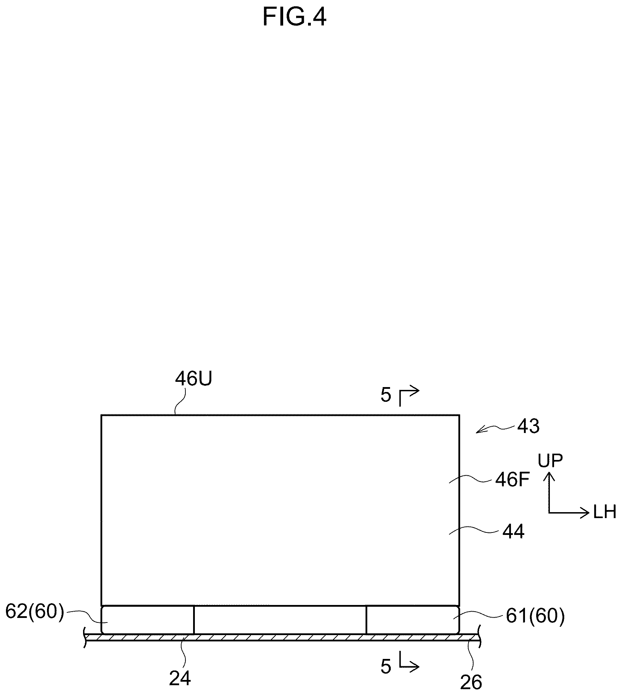

Explanation follows regarding exemplary embodiments of a battery pack and a method of manufacturing a battery pack according to the present disclosure, with reference to Fig. 1 to Fig. 15. Note that in each of the drawings, as appropriate, the arrow FR indicates a vehicle front side, which is the front side in a vehicle front-rear direction, the arrow IN indicates an inner direction in a vehicle width direction, and the arrow UP indicates a vehicle upper side, which is the upper side in a vehicle up-down direction. In the following descriptions, simple reference to the "front-rear direction", the "width direction", and the "up-down direction", indicate the vehicle front-rear direction, the vehicle width direction, and the vehicle up-down direction, respectively. Furthermore, the left-right direction means a left-right direction in a state of facing the vehicle front side. The arrow LH indicates a left direction.

### First Exemplary Embodiment

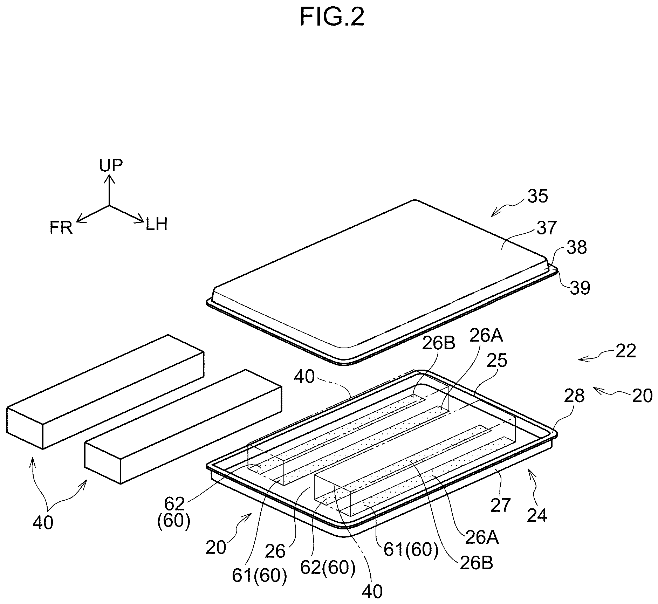

As illustrated in Fig. 1 and Fig. 2, a battery pack 20 of the present exemplary embodiment is installed at a vehicle (electric vehicle) 10. The vehicle 10 of the present exemplary embodiment is an electric vehicle (battery electric vehicle (BEV)).

The vehicle 10 includes a left and right pair of front wheels 11F, a left and right pair of rear wheels 11R, a left and right pair of rockers 12 that are part of a vehicle body skeleton member and that extend in the vehicle front-rear direction, and a front and rear pair of cross members 14 that are part of the vehicle body skeleton member and that extend in the vehicle width direction (left-right direction) and that have both end portions fixed to the left and right rockers 12.

The battery pack 20 of the present exemplary embodiment includes a battery case 22 and two battery modules 40. The power of the battery pack 20 (battery cell 43) is supplied to, for example, an electric motor (not illustrated in the drawings) which applies a driving force to the front wheels 11F and the rear wheels 11R.

As illustrated in Fig. 1 and Fig. 2, the battery case 22 includes a lower case 24 and an upper case 35.

The lower case 24 is a hollow body in which an opening 25 is formed at an upper surface thereof. The lower case 24 includes a bottom plate portion (second bottom portion) 26, a peripheral wall portion 27, and an outer peripheral flange 28. The planar shape of the peripheral wall portion 27 is annular, and a lower end part of the peripheral wall portion 27 is connected to an outer peripheral edge part of the bottom plate portion 26. The planar shape of the outer peripheral flange 28 is annular, and an inner peripheral edge part of the outer peripheral flange 28 is connected to an upper end part of the peripheral wall portion 27.

The upper case 35 is a hollow body in which an opening 36 is formed at a lower surface thereof. The upper case 35 includes a top plate portion 37, a peripheral wall portion 38, and an outer peripheral flange 39. The planar shape of the peripheral wall portion 38 is annular, and an upper end part of the peripheral wall portion 38 is connected to an outer peripheral edge part of the top plate portion 37. The planar shape of the outer peripheral flange 39 is annular, and an inner peripheral edge part of the outer peripheral flange 39 is connected to a lower end part of the peripheral wall portion 38.

As illustrated in Fig. 2, two battery modules 40 are provided at an interior of the lower case 24. The battery modules 40 are arranged in the left-right direction. The battery modules 40 are mounted on the bottom plate portion 26 of the lower case 24.

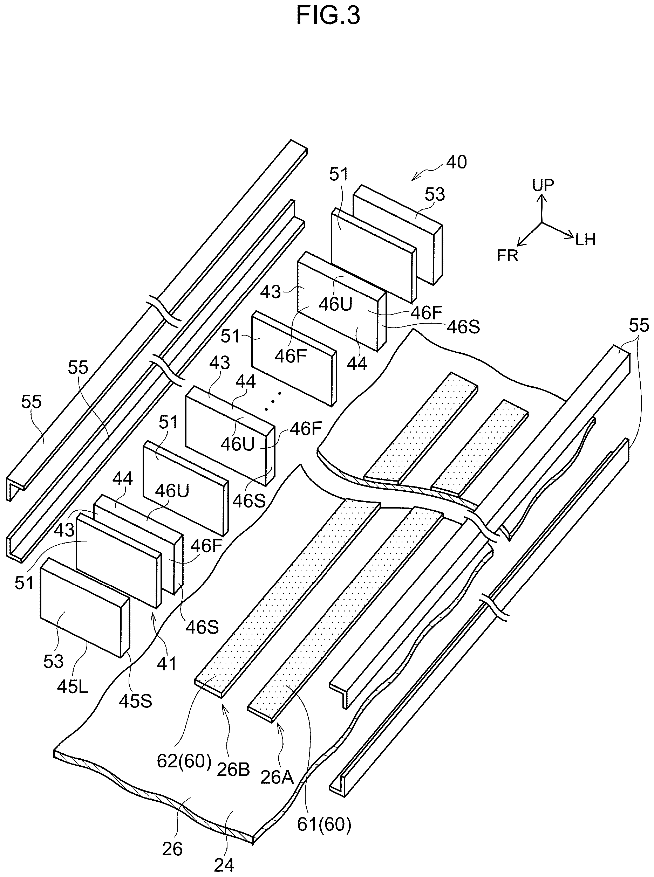

As illustrated in Fig. 3, the battery module 40 includes a battery stack 41, a pair of end plates 53, and four restraining members 55.

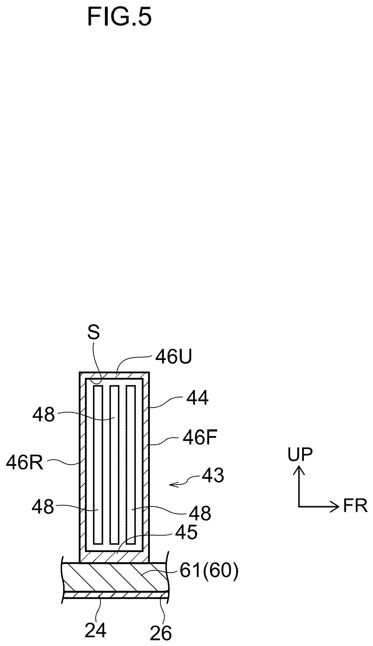

As illustrated in Fig. 3, the battery stack 41, which extends in the front-rear direction in plan view, includes plural battery cells 43, and plural insulating members 51 positioned between adjacent battery cells 43, immediately before the battery cell 43 positioned most forward, and immediately after the battery cell 43 positioned most rearward. Note that although only three battery cells 43 are illustrated in Fig. 3 for convenience, in practice, the battery stack 41 includes more than three battery cells 43. A metal cell case 44 configuring the outer shape of the battery cell 43, which is a lithium-ion battery, has a rectangular parallelepiped shape. As illustrated in Fig. 5, a housing space S is provided at an interior of the cell case 44. For example, plural electrode bodies 48, an electrolytic solution, and a gas are housed in the housing space S. In the present exemplary embodiment, three electrode bodies arranged in the front-rear direction are housed in the housing space S. Note that the number of electrode bodies is not limited to three. The number of electrode bodies housed in the housing space S may be one, or may be a plural number other than three.

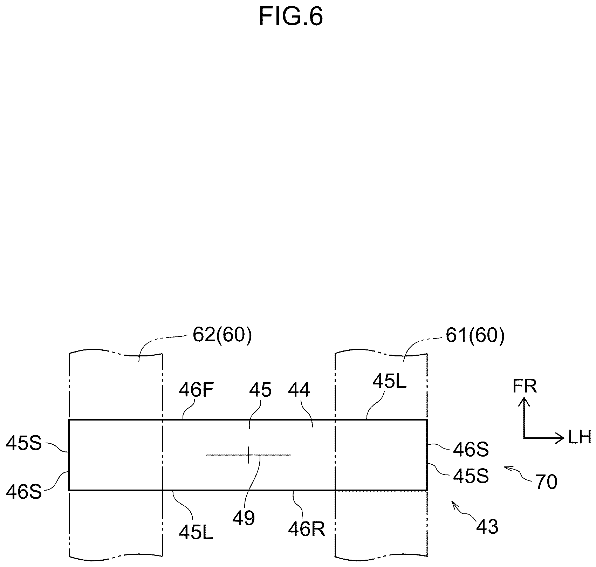

A bottom portion of the cell case 44 is configured by a bottom wall portion (first bottom portion) 45, and an upper surface of the cell case 44 is configured by an upper wall portion 46U. The planar shapes of the bottom wall portion 45 and the upper wall portion 46U are rectangular, which are longer in the left-right direction than in the front-rear direction. In other words, as illustrated in Fig. 6, the outer shape of the bottom wall portion 45 is configured by a pair of short sides 45S and a pair of long sides 45L. The short sides 45S are parallel to the front-rear direction, and the long sides 45L are parallel to the left-right direction. A front wall portion (side portion) 46F and a rear wall portion (side portion) 46R of the cell case 44 have the same front shape. The front shapes of the front wall portion 46F and the rear wall portion 46R are rectangular, which are longer in the left-right direction than in the up-down direction. A positive electrode and a negative electrode (neither of which is illustrated in the drawings) are provided at left and right side wall portions 46S of the cell case 44. Note that details of the cell case 44 are described below.

As illustrated in Fig. 6, a discharge valve 49 is provided at a central part, in the left-right direction, of the bottom wall portion 45 of the cell case 44. The discharge valve 49 is a thin portion having a + (plus) shape. Namely, the mechanical strength of the discharge valve 49 is lower than the part of the bottom wall portion 45 other than the discharge valve 49. For example, when the internal pressure of the cell case 44 reaches a predetermined value due to the occurrence of an internal short circuit in the battery cell 43, the discharge valve 49 is broken. In other words, the discharge valve 49 is opened.

As illustrated in Fig. 3, the battery module 40 includes a front and rear pair of end plates 53. The front end plate 53 is positioned immediately before the front-most insulating member 51, and the rear end plate 53 is positioned immediately after the rear-most insulating member 51.

As illustrated in Fig. 3, the four restraining members 55 extend in the front-rear direction and have a substantially L-shaped cross-sectional shape. Each restraining member 55 is fixed to the front and rear end plates 53 while covering the four corners of each battery cell 43 (cell case 44) and end plate 53, respectively. As a result, the front-rear length of each restraining member 55 becomes shorter than in a free state. In other words, the front and rear end plates 53 are pulled toward each other by the restraining members 55, whereby the front and rear end plates 53 sandwich the battery stack 41 from the front and rear sides. In this manner, the battery stack 41 and the end plates 53 are integrated by the left and right restraining members 55. That is, the battery module 40 including the battery stack 41, the pair of end plates 53, and the four restraining members 55 is completed.

Furthermore, the battery module 40 includes plural bus bars (not illustrated in the drawings) connected to the positive electrode and the negative electrode of each battery cell 43, and a cooler (not illustrated in the drawings).

As illustrated in Fig. 2 and Fig. 3, each battery module 40 is housed at the interior of the lower case 24, and each battery module 40 is fixed to the bottom plate portion 26. There are two regions, region 26A and region 26B, at an upper surface of the bottom plate portion 26. The two regions 26A and 26B extend in the front-rear direction and are separated from each other.

A thermally conductive material 60 is applied to the entire region of each of region 26A and region 26B. Specifically, a first thermally conductive portion 61 is applied to the entirety of each region 26A, and a second thermally conductive portion 62 is applied to the entirety of each region 26B. That is, the thermally conductive material 60 includes the first thermally conductive portion 61 on the left side which is applied to the region 26A and the second thermally conductive portion 62 on the right side which is applied to the region 26B. The thermal conductivity of the thermally conductive material 60 is high. That is, the thermal conductivity of the thermally conductive material 60 is higher than the thermal conductivity of the bottom plate portion 26, the cell case 44, and the insulating members 51.

As illustrated by the phantom lines in Fig. 2, the left side of the bottom portion of the battery module 40 is placed on the region 26A, and the right side of the bottom portion of the battery module 40 is placed on the region 26B. As a result, as illustrated in Fig. 6, the first thermally conductive portion 61 contacts the left side part of the bottom wall portion 45 of the cell case 44 of each battery cell 43, and the second thermally conductive portion 62 contacts the right side part of the bottom wall portion 45 of the cell case 44 of each battery cell 43. In other words, the discharge valve 49 of each bottom wall portion 45 does not contact the first thermally conductive portion 61 or the second thermally conductive portion 62. When each thermally conductive material 60 solidifies, the respective battery modules 40 are fixed to each region 26A and 26B by the first thermally conductive portion 61 and the second thermally conductive portion 62. The solidified thermally conductive material 60 can be elastically deformed to some extent. The thermally conductive material 60 is adhered to the bottom plate portion 26 and the bottom wall portion 45.

Furthermore, the end plates 53 of each battery module 40 are fixed to the bottom plate portion 26 via a metal bracket (not illustrated in the drawings).

Furthermore, the outer peripheral flange 39 of the upper case 35 is placed on the entire upper surface of the outer peripheral flange 28 of the lower case 24 housing the two battery modules 40, via a seal material (not illustrated in the drawings), and the outer peripheral flange 28 and the outer peripheral flange 39 are fixed to each other. As a result, the battery pack 20 is completed.

Furthermore, as illustrated in Fig. 1, the battery case 22 of the completed battery pack 20 is supported by the rockers 12 and the cross members 14. That is, in a state in which the top plate portion 37 and the peripheral wall portion 38 of the upper case 35 are positioned in the space surrounded by the rockers 12 and the cross members 14, the outer peripheral flange 39 is fixed to the lower surface of each rocker 12 and each cross member 14.

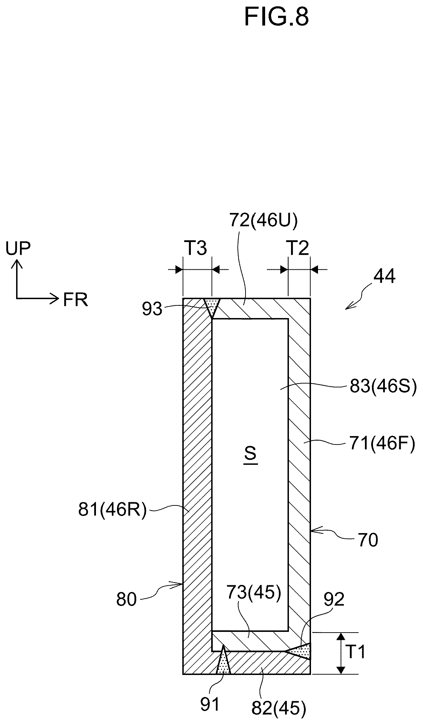

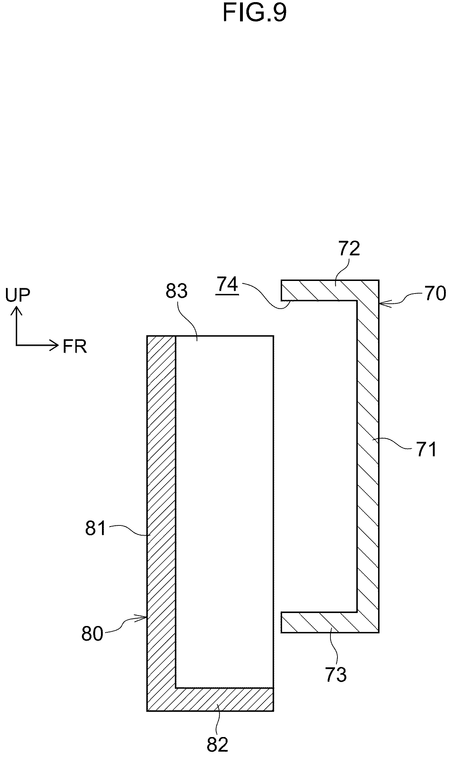

Next, explanation follows regarding details of the cell case 44 with reference to Fig. 8 and Fig. 9. Note that in Fig. 8 and Fig. 9, the electrode bodies 48 are omitted from the drawings.

As illustrated in Fig. 8, the housing space S, which is a closed space, is provided at the interior of the cell case 44. The electrode bodies 48 (see Fig. 5) are housed in the housing space S. The cell case 44 includes the bottom wall portion 45 that defines the lower part of the housing space S, the front wall portion 46F and the rear wall portion 46R which define sides (in the present exemplary embodiment, the vehicle front-rear direction sides) of the housing space S, the upper wall portion 46U that defines the upper part of the housing space S, and the side wall portions 46S which define both sides, in the vehicle width direction, of the housing space S. The bottom wall portion 45 is disposed below the electrode bodies 48. The front wall portion 46F and the rear wall portion 46R are disposed in the longitudinal direction of the electrode bodies 48 (the front and rear in the vehicle front-rear direction). The thickness T1 of the bottom wall portion 45 of the cell case 44 is greater than the thickness T2 of the front wall portion 46F and the thickness T3 of the rear wall portion 46R.

As illustrated in Fig. 8 and Fig. 9, in a cross-section (the cross-section illustrated in Fig. 8) orthogonal to the longitudinal direction (in the present exemplary embodiment, the vehicle width direction), the cell case 44 includes a first member 70 in which an opening 74 is provided in a side (in the present exemplary embodiment, in the rear in the vehicle front-rear direction), and a second member 80 that closes the opening 74 of the first member 70.

The first member 70 integrally includes a flat plate-shaped front plate portion 71 that extends along the vehicle up-down direction and the vehicle width direction, a flat plate-shaped upper plate portion 72 that is bent substantially at right angles from the upper end part, in the vehicle up-down direction, of the front plate portion 71 and that extends toward the rear side in the vehicle front-rear direction, and a flat plate-shaped first lower plate portion 73 that is bent substantially at right angles from the lower end part, in the vehicle up-down direction, of the front plate portion 71 and that extends toward the rear side in the vehicle front-rear direction. The first member 70 is formed, for example, by bending a single flat plate-shaped plate material made of metal. The upper plate portion 72 and the first lower plate portion 73 are disposed so as to be spaced apart in the up-down direction and face each other substantially in parallel. A space is formed between the upper plate portion 72 and the first lower plate portion 73. Furthermore, the opening 74 is provided between the rear end part of the upper plate portion 72 and the rear end part of the first lower plate portion 73. The opening 74 communicates with the space provided between the upper plate portion 72 and the first lower plate portion 73. The opening 74 is provided over the entire area of the first member 70 in the longitudinal direction (the vehicle width direction).

As illustrated in Fig. 8, the front plate portion 71 configures the front wall portion 46F of the cell case 44. The upper plate portion 72 configures the upper wall portion 46U of the cell case 44. Furthermore, the first lower plate portion 73 configures part of the bottom wall portion 45 of the cell case 44.

As illustrated in Fig. 8 and Fig. 9, the second member 80 integrally includes a flat plate-shaped rear plate portion 81 that extends along the vehicle up-down direction and the vehicle width direction, a flat plate-shaped second lower plate portion 82 that is bent substantially at right angles from the lower end part, in the vehicle up-down direction, of the rear plate portion 81 and that extends toward the front side in the vehicle front-rear direction, and a pair of flat plate-shaped side plate portions 83 bent substantially at right angles from both end parts, in the vehicle width direction, of the rear plate portion 81 and extending toward the front side in the vehicle front-rear direction. The second member 80 is formed, for example, by bending a single flat plate-shaped plate material made of metal.

As illustrated in Fig. 8, the rear plate portion 81 configures the rear wall portion 46R of the cell case 44. Furthermore, the second lower plate portion 82 configures part of the bottom wall portion 45 of the cell case 44. The side plate portions 83 configure the side wall portions 46S of the cell case 44.

The first member 70 and the second member 80 are disposed so that the lower surface of the first lower plate portion 73 of the first member 70 contacts the upper surface of the second lower plate portion 82 of the second member 80. In other words, the first lower plate portion 73 of the first member 70 and the second lower plate portion 82 of the second member 80 overlap with each other in the vehicle up-down direction. The rear end part of the first lower plate portion 73 of the first member 70 abuts the front surface of the rear plate portion 81 of the second member 80. The first lower plate portion 73 and second lower plate portion 82, which overlap with each other, configure the bottom wall portion 45 of the cell case 44.

Furthermore, the front end part of the second lower plate portion 82 of the second member 80 and the front end part of the front plate portion 71 of the first member 70 have the same position in the vehicle front-rear direction. In other words, the front surface of the second lower plate portion 82 and the front surface of the front plate portion 71 are flush with each other.

Furthermore, the rear end part of the upper plate portion 72 of the first member 70 abuts the front surface of the rear plate portion 81 of the second member 80. The upper end part of the upper plate portion 72 of the first member 70 and the upper end part of the rear plate portion 81 of the second member 80 have the same position in the vehicle up-down direction. In other words, the upper surface of the upper plate portion 72 and the upper surface of the rear plate portion 81 are flush with each other.

A first welded portion 91 is provided at the first lower plate portion 73 and the second lower plate portion 82. The first welded portion 91 penetrates the second lower plate portion 82, and a distal end part (upper end part) of the first welded portion 91 is positioned in the first lower plate portion 73. The first welded portion 91 is a weld mark at which welding is performed from the lower surface of the second lower plate portion 82, and the second lower plate portion 82 and the first lower plate portion 73 are welded together.

Furthermore, a second welded portion 92 is provided at the front plate portion 71 and the second lower plate portion 82. The second welded portion 92 is provided at an abutting part between the front plate portion 71 and the second lower plate portion 82. The second welded portion 92 is a weld mark at which the front plate portion 71 and the second lower plate portion 82 are welded together.

Furthermore, a third welded portion 93 is provided at the upper plate portion 72 and the rear plate portion 81. The third welded portion 93 is provided at an abutting part between the upper plate portion 72 and the rear plate portion 81. The third welded portion 93 is a weld mark at which the upper plate portion 72 and the rear plate portion 81 are welded together.

The first member 70 and the second member 80 are welded and fixed together by the first welded portion 91, the second welded portion 92, and the third welded portion 93. The second member 80 is attached to the first member 70 so as to close the opening 74 of the first member 70.

Next, explanation follows regarding a method of manufacturing the battery pack according to the present exemplary embodiment. A method of manufacturing the battery cell 43 included in the battery pack 20 is described below.

First, the first member 70 is manufactured by bending a single metal plate material. Next, the second member 80 is manufactured by bending a single metal plate material. Next, the electrode bodies 48 (see Fig. 5) are housed in the space at the inner side of the first member 70 (that is, the space between the upper plate portion 72 and the first lower plate portion 73) via the opening 74 (a step of housing the electrode bodies 48). Specifically, by moving the electrode bodies 48 or the first member 70 in a short-side direction of the cell case 44 (in the present exemplary embodiment, the vehicle front-rear direction), the electrode bodies 48 are housed at the inner side of the first member 70.

Next, the second member 80 is attached to the first member 70, in which the electrode bodies 48 are housed, so as to close the opening 74 (an attaching step). Specifically, first, the first lower plate portion 73 of the first member 70, in which the electrode bodies 48 are housed, is placed on the second lower plate portion 82 of the second member 80. In this state, the first member 70 and the second member 80 are welded. Specifically, the first member 70 and the second member 80 are welded and fixed together at the first welded portion 91, the second welded portion 92, and the third welded portion 93.

As a result, the battery cell 43, in which the electrode bodies 48 are housed, is manufactured in the cell case 44.

According to the present exemplary embodiment, the following effects can be obtained.

For example, when each battery cell 43 of each battery module 40 supplies power to an electric motor, the temperature of each battery cell 43 may increase. Part of the heat of each battery cell 43 is transmitted from the left and right side parts of the bottom wall portion 45 of the cell case 44 to the bottom plate portion 26 of the lower case 24 via the first thermally conductive portion 61 and the second thermally conductive portion 62. As a result, the first thermally conductive portion 61 and the second thermally conductive portion 62 dissipate the heat of the battery cells 43 to the bottom plate portion 26, whereby an excessively high temperature of the battery cells 43 is prevented.

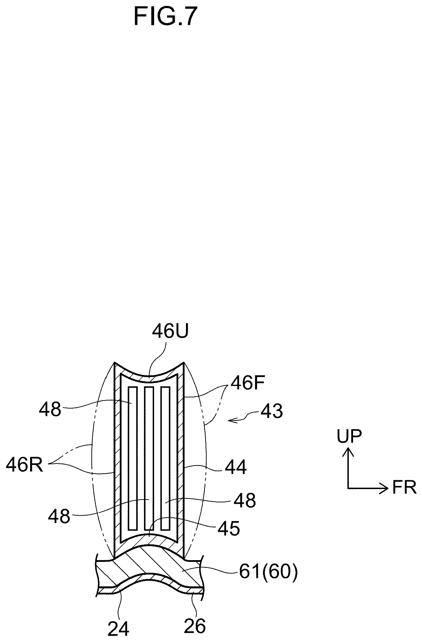

Incidentally, when an internal short circuit occurs in any of the battery cells 43 of either of the battery modules 40, the internal pressure of the cell case 44 increases, and the front wall portion 46F and the rear wall portion 46R may expand outward as illustrated by the phantom lines in Fig. 7. In this case, due to the expansion of the front wall portion 46F and the rear wall portion 46R, the bottom wall portion 45 and the upper wall portion 46U may deform so as to be concave toward the interior space side of the cell case 44. In other words, the bottom wall portion 45 may deform so that a part between the pair of long sides 45L of the bottom wall portion 45 is displaced upward. In a case in which the bottom wall portion 45 deforms so as to be concave toward the interior space side of the cell case 44, as illustrated in Fig. 7, the first thermally conductive portion 61, which contacts the bottom wall portion 45 of the cell case 44 of each battery cell 43, is bent so as to be convex upward. Furthermore, although not illustrated in the drawings, similarly, the second thermally conductive portion 62, which contacts the bottom wall portion 45 of the cell case 44 of each battery cell 43, is bent and deforms so as to be convex upward in accordance with the deformation of the bottom wall portion 45.

In the present exemplary embodiment, the thickness T1 of the bottom wall portion 45 of the cell case 44 is greater than the thickness T2 of the front wall portion 46F of the cell case 44 and the thickness T3 of the rear wall portion 46R of the cell case 44. In this manner, by making the thickness T1 of the bottom wall portion 45 thick, the rigidity of the bottom wall portion 45 is improved. As a result, deformation of the bottom wall portion 45 is suppressed. Therefore, separation of the bottom wall portion 45 and the thermally conductive material 60 can be suppressed. Accordingly, it is possible to suppress an increase in the temperature of the battery cell 43 by using the thermally conductive material 60 that is provided between the bottom wall portion 45 of the battery cell 43 and the bottom plate portion 26 of the battery case 22.

In the present exemplary embodiment, the opening 74 is provided in the first member 70 at a side (in the present exemplary embodiment, the vehicle rear side) in a cross-section orthogonal to the longitudinal direction of the cell case 44 (the vehicle width direction). The opening 74 in the cross-section orthogonal to the longitudinal direction can be formed so as to extend in the longitudinal direction, whereby a relatively large opening 74 can easily be obtained. Therefore, since the electrode bodies 48 can be housed at the interior of the cell case 44 via the large opening 74, the electrode bodies 48 can easily be housed.

Furthermore, in the present exemplary embodiment, the cell case 44 includes two members, that is, the first member 70 and the second member 80. As a result, for example, by overlapping the two members (the first member 70 and the second member 80), the thickness of the bottom wall portion 45 of the cell case 44 can be increased. As a result, the degree of freedom in design can be improved, whereby the thickness of the bottom wall portion 45 can easily be increased.

In the present exemplary embodiment, in the bottom wall portion 45 of the cell case 44, the first member 70 and the second member 80 overlap with each other in the up-down direction. In this manner, the thickness of the bottom wall portion 45 can be increased by overlapping the first member 70 and the second member 80. As a result, even in a case in which the thickness of the first member 70 and the thickness of the second member 80 are uniform, the thickness of the bottom wall portion 45 can be increased. Therefore, even if the thickness of part of the first member 70 or the second member 80 is not changed, the thickness of the bottom wall portion 45 can be increased, whereby the thickness of the bottom wall portion 45 can easily be increased.

### Second Exemplary Embodiment

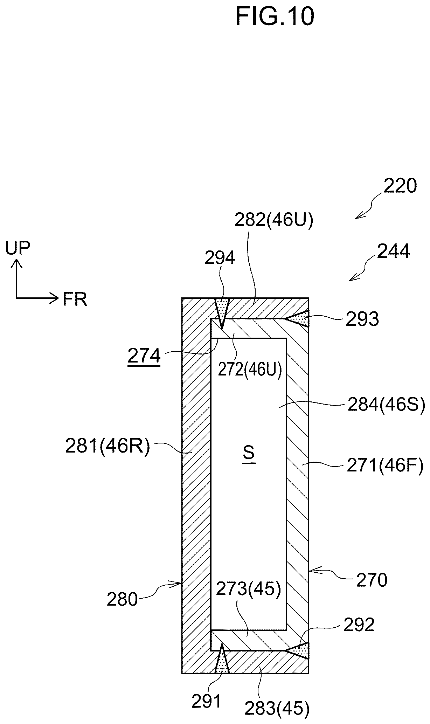

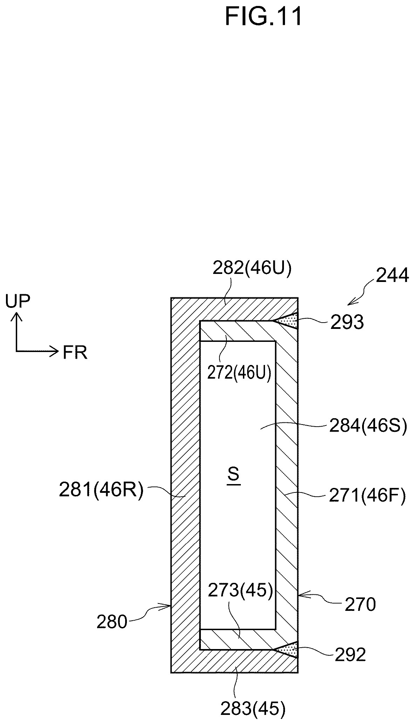

Next, explanation follows regarding a battery pack according to a second exemplary embodiment of the present disclosure, with reference to Fig. 10 and Fig. 11. In the present exemplary embodiment, the shape of the cell case is different from that of the first exemplary embodiment. Hereinafter, members different from those of the first exemplary embodiment will be described, and the same members as those of the first exemplary embodiment will be denoted by the same reference numerals, and detailed description thereof will be omitted.

As illustrated in Fig. 10, in a cross-section (the cross-section illustrated in Fig. 10) orthogonal to the longitudinal direction (in the present exemplary embodiment, the vehicle width direction), a cell case 244 of a battery pack 220 according to the present exemplary embodiment includes a first member 270 in which an opening 274 is provided in a side (in the present exemplary embodiment, in the rear in the vehicle front-rear direction), and a second member 280 that closes the opening 274 of the first member 270.

The first member 270 integrally includes a flat plate-shaped front plate portion 271 that extends along the vehicle up-down direction and the vehicle width direction, a flat plate-shaped first upper plate portion 272 that is bent substantially at right angles from the upper end part, in the vehicle up-down direction, of the front plate portion 271 and that extends toward the rear side in the vehicle front-rear direction, and a flat plate-shaped first lower plate portion 273 that is bent substantially at right angles from the lower end part, in the vehicle up-down direction, of the front plate portion 271 and that extends toward the rear side in the vehicle front-rear direction. The first member 270 is formed, for example, by bending a single flat plate-shaped plate material made of metal. The first upper plate portion 272 and the first lower plate portion 273 are disposed so as to be spaced apart in the up-down direction and face each other substantially in parallel. A space is formed between the first upper plate portion 272 and the first lower plate portion 273. Furthermore, the opening 274 is provided between the rear end part of the first upper plate portion 272 and the rear end part of the first lower plate portion 273. The opening 274 communicates with the space provided between the first upper plate portion 272 and the first lower plate portion 273. The opening 274 is provided over the entire area of the first member 270 in the longitudinal direction (the vehicle width direction).

As illustrated in Fig. 10, the front plate portion 271 configures the front wall portion 46F of the cell case 244. The first upper plate portion 272 configures part of the upper wall portion 46U of the cell case 244. Furthermore, the first lower plate portion 273 configures part of the bottom wall portion 45 of the cell case 244.

As illustrated in Fig. 10, the second member 280 integrally includes a flat plate-shaped rear plate portion 281 that extends along the vehicle up-down direction and the vehicle width direction, a flat plate-shaped second upper plate portion 282 that is bent substantially at right angles from the upper end part, in the vehicle up-down direction, of the rear plate portion 281 and that extends toward the front side in the vehicle front-rear direction, a flat plate-shaped second lower plate portion 283 that is bent substantially at right angles from the lower end part, in the vehicle up-down direction, of the rear plate portion 281 and that extends toward the front side in the vehicle front-rear direction, and a pair of flat plate-shaped side plate portions 284 bent substantially at right angles from both end parts, in the vehicle width direction, of the rear plate portion 281 and extending toward the front side in the vehicle front-rear direction. The second member 280 is formed, for example, by bending a single flat plate-shaped plate material made of metal.

As illustrated in Fig. 10, the rear plate portion 281 configures the rear wall portion 46R of the cell case 244. Furthermore, the second upper plate portion 282 configures part of the upper wall portion 46U of the cell case 244. The second lower plate portion 283 configures part of the bottom wall portion 45 of the cell case 244. The side plate portions 284 configure the side wall portions 46S of the cell case 244.

The first member 270 and the second member 280 are disposed so that the lower surface of the first lower plate portion 273 of the first member 270 contacts the upper surface of the second lower plate portion 283 of the second member 280. In other words, the first lower plate portion 273 of the first member 270 and the second lower plate portion 283 of the second member 280 overlap with each other in the vehicle up-down direction. The rear end part of the first lower plate portion 273 of the first member 270 abuts the front surface of the rear plate portion 281 of the second member 280. The first lower plate portion 273 and the second lower plate portion 283, which overlap with each other, configure the bottom wall portion 45 of the cell case 244.

Furthermore, the first member 270 and the second member 280 are disposed so that the upper surface of the first upper plate portion 272 of the first member 270 contacts the lower surface of the second upper plate portion 282 of the second member 280. In other words, the first upper plate portion 272 of the first member 270 and the second upper plate portion 282 of the second member 280 overlap with each other in the vehicle up-down direction. The rear end part of the first upper plate portion 272 of the first member 270 abuts the front surface of the rear plate portion 281 of the second member 280. The first upper plate portion 272 and the second upper plate portion 282, which overlap with each other, configure the upper wall portion 46U of the cell case 244.

Furthermore, the front end part of the second upper plate portion 282 of the second member 280, the front end part of the second lower plate portion 283, and the front end part of the front plate portion 271 of the first member 270 have the same position in the vehicle front-rear direction. In other words, the front surface of the second upper plate portion 282, the front surface of the second lower plate portion 283, and the front surface of the front plate portion 271 are flush with each other.

A first welded portion 291 is provided at the first lower plate portion 273 and the second lower plate portion 283. The first welded portion 291 penetrates the second lower plate portion 283, and a distal end part (upper end part) of the first welded portion 291 is positioned in the first lower plate portion 273. The first welded portion 291 is a weld mark at which welding is performed from the lower surface of the second lower plate portion 283, and the second lower plate portion 283 and the first lower plate portion 273 are welded together.

Furthermore, a second welded portion 292 is provided at the front plate portion 271 and the second lower plate portion 283. The second welded portion 292 is provided at an abutting part between the front plate portion 271 and the second lower plate portion 283. The second welded portion 292 is a weld mark at which the front plate portion 271 and the second lower plate portion 283 are welded together.

Furthermore, a third welded portion 293 is provided at the front plate portion 271 and the second upper plate portion 282. The third welded portion 293 is provided at an abutting part between the front plate portion 271 and the second upper plate portion 282. The third welded portion 293 is a weld mark at which the front plate portion 271 and the second upper plate portion 282 are welded together.

A fourth welded portion 294 is provided at the first upper plate portion 272 and the second upper plate portion 282. The fourth welded portion 294 penetrates the second upper plate portion 282, and a distal end part (lower end part) is positioned in the first upper plate portion 272. The fourth welded portion 294 is a weld mark at which welding is performed from the upper surface of the second upper plate portion 282, and the second upper plate portion 282 and the first upper plate portion 272 are welded together.

The first member 270 and the second member 280 are welded and fixed together by the first welded portion 291, the second welded portion 292, the third welded portion 293, and the fourth welded portion 294. The second member 280 is attached to the first member 270 so as to close the opening 274 of the first member 270.

Note that as illustrated in Fig. 11, the first welded portion 291 and the fourth welded portion 294 may be omitted. In other words, the first member 270 and the second member 280 may be welded and fixed together only by the second welded portion 292 and the third welded portion 293.

Next, explanation follows regarding a method of manufacturing the battery pack according to the present exemplary embodiment.

In the present exemplary embodiment, the electrode bodies 48 (see Fig. 5) are housed in the space at the inner side of the first member 270 (that is, the space between the first upper plate portion 272 and the first lower plate portion 273) via the opening 274. Other steps are substantially the same as those in the above-described first exemplary embodiment, and thus a detailed description thereof is omitted.

In the present exemplary embodiment, the same effects as those of the above-described first exemplary embodiment are also exhibited.

### Third Exemplary Embodiment

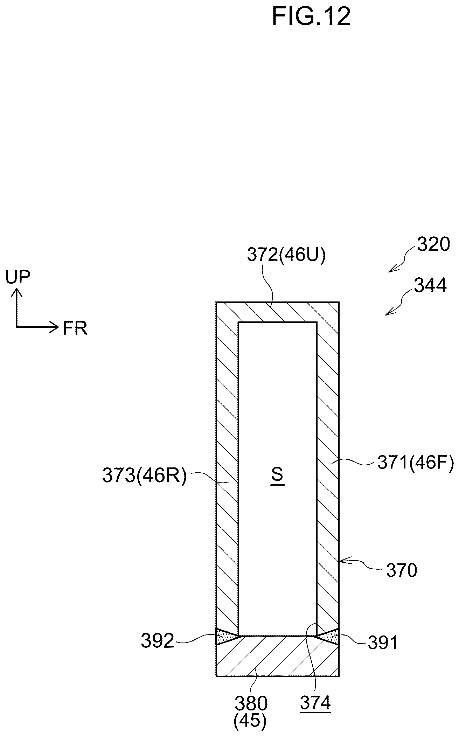

Next, explanation follows regarding a battery pack according to a third exemplary embodiment of the present disclosure, with reference to Fig. 12. In the present exemplary embodiment, the shape of the cell case is different from that of the first exemplary embodiment. Hereinafter, members different from those of the first exemplary embodiment will be described, and the same members as those of the first exemplary embodiment will be denoted by the same reference numerals, and detailed description thereof will be omitted.

As illustrated in Fig. 12, in a cross-section (the cross-section illustrated in Fig. 10) orthogonal to the longitudinal direction (in the present exemplary embodiment, the vehicle width direction), a cell case 344 of a battery pack 320 according to the present exemplary embodiment includes a first member 370 in which an opening 374 is provided in a side (in the present exemplary embodiment, in the lower side in the vehicle up-down direction), and a second member 380 that closes the opening 374 of the first member 370.

The first member 370 integrally includes a flat plate-shaped front plate portion 371 that extends along the vehicle up-down direction and the vehicle width direction, a flat plate-shaped upper plate portion 372 that is bent substantially at right angles from the upper end part, in the vehicle up-down direction, of the front plate portion 371 and that extends toward the rear side in the vehicle front-rear direction, and a rear plate portion 373 that is bent substantially at right angles from the rear end part, in the vehicle front-rear direction, of the upper plate portion 372 and that extends toward the lower side in the vehicle up-down direction. The first member 370 is formed, for example, by bending a single flat plate-shaped plate material made of metal. The front plate portion 371 and the rear plate portion 373 are disposed so as to be spaced apart in the front-rear direction and face each other substantially in parallel. A space is formed between the front plate portion 371 and the rear plate portion 373. Furthermore, the opening 374 is provided between the lower end part of the front plate portion 371 and the lower end part of the rear plate portion 373. In other words, the first member 370 is provided with the opening 374 that opens downward. The opening 374 communicates with the space provided between the front plate portion 371 and the rear plate portion 373. The opening 374 is provided over the entire area of the first member 370 in the longitudinal direction (the vehicle front-rear direction).

The front plate portion 371 configures the front wall portion 46F of the cell case 344. The upper plate portion 372 configures part of the upper wall portion 46U of the cell case 344. Furthermore, the rear plate portion 373 configures the rear wall portion 46R of the cell case 344.

As illustrated in Fig. 12, the second member 380 is a flat plate-shaped member, and closes the opening 374 from below. The thickness of the second member 380 is greater than the thickness of the front plate portion 371, the upper plate portion 372, and the rear plate portion 373 of the first member 370. The second member 380 configures the bottom wall portion 45 of the cell case 344. The lower ends of the front plate portion 371 and the rear plate portion 373 abut the upper surface of the second member 380.

The material of the first member 370 and the material of the second member 380 are different materials. Specifically, examples of the material of the first member 370 include a metal such as stainless steel. Furthermore, examples of the material of the second member 380 include a metal such as aluminum and stainless steel.

A first welded portion 391 is provided at the front plate portion 371 of the first member 370 and the second member 380. The first welded portion 391 is provided at an abutting part between the front plate portion 371 and the second member 380. The first welded portion 391 is a weld mark at which the front plate portion 371 and the second member 380 are welded together.

A second welded portion 392 is provided at the rear plate portion 373 of the first member 370 and the second member 380. The second welded portion 392 is provided at an abutting part between the rear plate portion 373 and the second member 380. The second welded portion 392 is a weld mark at which the rear plate portion 373 and the second member 380 are welded together.

Next, explanation follows regarding a method of manufacturing the battery pack according to the present exemplary embodiment.

In the present exemplary embodiment, the electrode bodies 48 (see Fig. 5) are housed in the space at the inner side of the first member 370 (that is, the space between the front plate portion 371 and the rear plate portion 373) via the opening 374. Other steps are substantially the same as those in the above-described first exemplary embodiment, and thus a detailed description thereof is omitted.

In the present exemplary embodiment, the same effects as those of the above-described first exemplary embodiment are also exhibited.

### Fourth Exemplary Embodiment

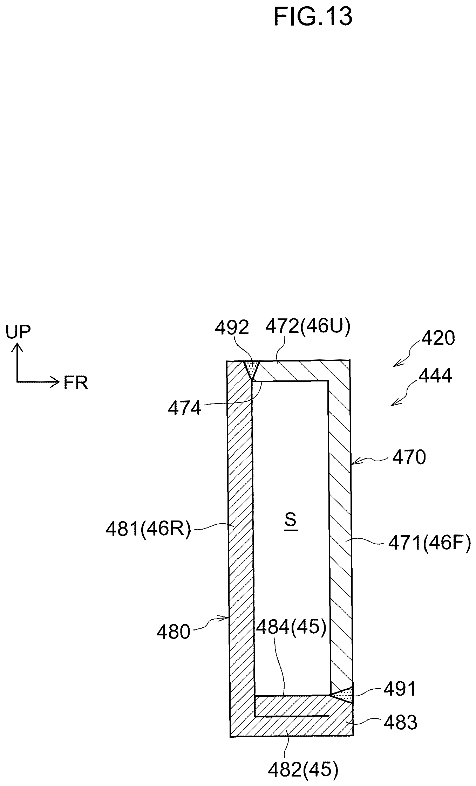

Next, explanation follows regarding a battery pack according to a fourth exemplary embodiment of the present disclosure, with reference to Fig. 13. In the present exemplary embodiment, the shape of the cell case is different from that of the first exemplary embodiment. Hereinafter, members different from those of the first exemplary embodiment will be described, and the same members as those of the first exemplary embodiment will be denoted by the same reference numerals, and detailed description thereof will be omitted.

As illustrated in Fig. 13, in a cross-section (the cross-section illustrated in Fig. 10) orthogonal to the longitudinal direction (in the present exemplary embodiment, the vehicle width direction), a cell case 444 of a battery pack 420 according to the present exemplary embodiment includes a first member 470 in which an opening 474 is provided in sides (in the present exemplary embodiment, rearward and downward in the vehicle front-rear direction), and a second member 480 that closes the opening 474 of the first member 470.

The first member 470 integrally includes a flat plate-shaped front plate portion 471 that extends along the vehicle up-down direction and the vehicle width direction, and a flat plate-shaped upper plate portion 472 that is bent substantially at right angles from the upper end part, in the vehicle up-down direction, of the front plate portion 471 and that extends toward the rear side in the vehicle front-rear direction. The first member 470 is formed, for example, by bending a single flat plate-shaped plate material made of metal. A space is formed between the front plate portion 471 and the upper plate portion 472.

The front plate portion 471 configures the front wall portion 46F of the cell case 444. The upper plate portion 472 configures part of the upper wall portion 46U of the cell case 444.

The second member 480 integrally includes a flat plate-shaped rear plate portion 481 that extends along the vehicle up-down direction and the vehicle width direction, a flat plate-shaped first overlapping plate portion (first overlapping portion) 482 that is bent substantially at right angles from the lower end part, in the vehicle up-down direction, of the rear plate portion 481 and that extends toward the front side in the vehicle front-rear direction, a flat plate-shaped connection plate portion 483 that is bent at substantially right angles from the front end part of the first overlapping plate portion 482 and that extends toward the upper side in the vehicle up-down direction, and a flat plate-shaped second overlapping plate portion (second overlapping portion) 484 that is bent substantially at right angles from the upper end part, in the vehicle up-down direction, of the connection plate portion 483 and that extends toward the rear side in the vehicle front-rear direction. The second member 480 is formed, for example, by bending a single flat plate-shaped plate material made of metal.

The rear plate portion 481 configures the rear wall portion 46R of the cell case 444. The upper surface of the first overlapping plate portion 482 contacts the lower surface of the second overlapping plate portion 484. In other words, the first overlapping plate portion 482 and the second overlapping plate portion 484 overlap with each other in the vehicle up-down direction. The first overlapping plate portion 482 and the second overlapping plate portion 484, which overlap with each other, configure the bottom wall portion 45 of the cell case 444.

A first welded portion 491 is provided at the front plate portion 471 of the first member 470 and the connection plate portion 483 of the second member 480. The first welded portion 491 is provided at an abutting part between the front plate portion 471 and the connection plate portion 483. The first welded portion 491 is a weld mark at which the front plate portion 471 and the connection plate portion 483 are welded together.

A second welded portion 492 is provided at the upper plate portion 472 of the first member 470 and the rear plate portion 481 of the second member 480. The second welded portion 492 is provided at an abutting part between the upper plate portion 472 and the rear plate portion 481. The second welded portion 492 is a weld mark at which the upper plate portion 472 and the rear plate portion 481 are welded together.

Next, explanation follows regarding a method of manufacturing the battery pack according to the present exemplary embodiment.

In the present exemplary embodiment, the electrode bodies 48 (see Fig. 5) are housed in the space at the inner side of the first member 470 (that is, the space between the front plate portion 471 and the upper plate portion 472) via the opening 474. Other steps are substantially the same as those in the above-described first exemplary embodiment, and thus a detailed description thereof is omitted.

In the present exemplary embodiment, the same effects as those of the above-described first exemplary embodiment are also exhibited.

Furthermore, in the present exemplary embodiment, the first member 470 or the second member 480 integrally includes, in the bottom wall portion 45 of the cell case 444, the first overlapping plate portion 482 and the second overlapping plate portion 484 that overlaps with the first overlapping plate portion 482 in the up-down direction. In this manner, the thickness of the bottom wall portion 45 can be increased by overlapping the first overlapping plate portion 482 and the second overlapping plate portion 484. As a result, even in a case in which the thickness of the first member 470 and the thickness of the second member 480 are uniform, the thickness of the bottom wall portion 45 can be increased. Therefore, even if the thickness of part of the first member 470 or the second member 480 is not changed, the thickness of the bottom wall portion 45 can be increased, whereby the thickness of the bottom wall portion 45 can easily be increased.

In the present exemplary embodiment, the first member 470 has an L-shape. As a result, the opening of the first member 470 is provided in two directions among upward, downward, and laterally. Therefore, the electrode bodies 48 can easily be housed in the first member 470 as compared to a case in which the opening is provided only in one direction.

### Fifth Exemplary Embodiment

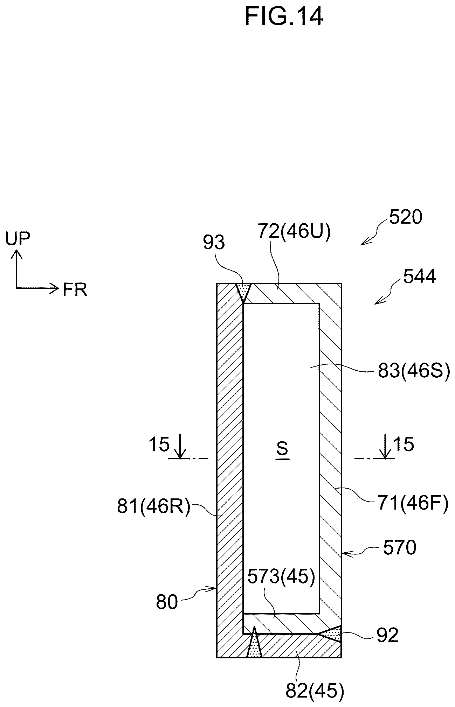

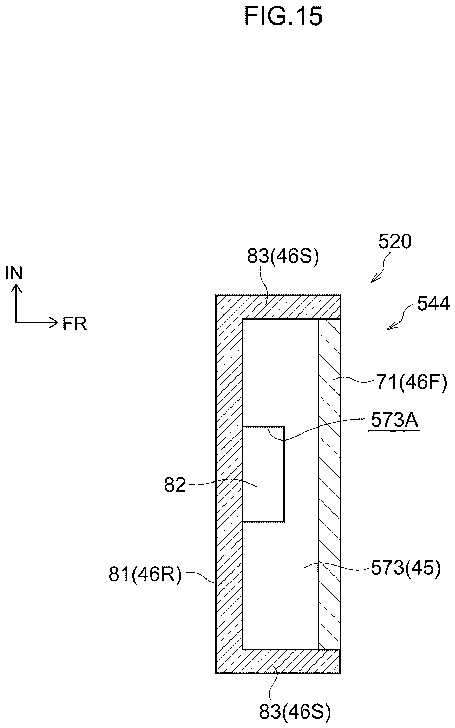

Next, explanation follows regarding a battery pack according to a fifth exemplary embodiment of the present disclosure, with reference to Fig. 14 and Fig. 15. In the present exemplary embodiment, the shape of the first lower plate portion of the first member is different from that of the first exemplary embodiment. Hereinafter, members different from those of the first exemplary embodiment will be described, and the same members as those of the first exemplary embodiment will be denoted by the same reference numerals, and detailed description thereof will be omitted.

As illustrated in Fig. 14 and Fig. 15, in a cell case 544 of a battery pack 520 according to the present exemplary embodiment, only a first lower plate portion 573 of a first member 570 is different from the cell case 44 of the battery pack 20 of the first exemplary embodiment.

As illustrated in Fig. 15, in the first lower plate portion 573 of the present exemplary embodiment, a cutout 573A is provided at the rear end part in the vehicle front-rear direction and at the center part in the vehicle width direction. In other words, in the region in which the cutout 573A is provided, the second lower plate portion 82 of the second member 80 provided at the lower side of the first lower plate portion 573 is exposed.

Since a method of manufacturing a battery pack according to the present exemplary embodiment is the same as the first exemplary embodiment, a description thereof is omitted.

As in the present exemplary embodiment, even in a case in which there is a region having a small thickness in part of the bottom wall portion 45 of the cell case 544, the same effect as the first exemplary embodiment is exhibited.

Although the battery pack and the method of manufacturing a battery pack according to the exemplary embodiments have been described above, the design of the present disclosure can be appropriately changed within a range not departing from the gist of the present disclosure.

For example, the battery pack may include three or more battery modules.

Furthermore, for example, the number of battery cells included in the battery module may be any number.

Furthermore, for example, instead of the thermally conductive material 60, a deformable thermally conductive material different from an adhesive may be brought into contact with the bottom wall portion 45 of the cell case 44 and the bottom plate portion 26 of the lower case 24.

Furthermore, for example, the lamination direction of each battery cell in the battery pack (the extension direction of the battery module) may be a direction different from the front-rear direction. Furthermore, the arrangement direction of the battery modules may be a direction different from the left-right direction.

Furthermore, for example, the vehicle may be an electric vehicle which is different from an electric vehicle and which includes an electric motor that uses the power of the battery pack. For example, the vehicle may be a hybrid electric vehicle (HEV) or a plug-in hybrid electric vehicle (PHEV).

## Claims

1. A battery pack, comprising:
at least one battery cell comprising an electrode body and a cell case that includes a first bottom portion disposed below the electrode body and a side portion disposed in a longitudinal direction of the electrode body;
a battery case that houses the at least one battery cell; and
a thermally conductive material that is adhered to the first bottom portion and a second bottom portion, which is a bottom portion of the battery case,
wherein a thickness of the first bottom portion is greater than a thickness of the side portion.

2. The battery pack according to claim 1, wherein the cell case comprises:
a first member that is provided with an opening in at least one of an upper direction, a lower direction or a lateral direction, in a cross-section orthogonal to the longitudinal direction; and
a second member that closes the opening of the first member.

3. The battery pack according to claim 2, wherein the first member has an L-shape in the cross-section.

4. The battery pack according to claim 2, wherein, at the first bottom portion of the cell case, the first member and the second member overlap with each other in an up-down direction.

5. The battery pack according to claim 2, wherein the first member or the second member integrally includes, at the first bottom portion of the cell case, a first overlapping portion and a second overlapping portion that overlaps with the first overlapping portion in an up-down direction.

6. The battery pack according to claim 2, wherein a welded portion, which fixes the first member and the second member, is provided at the first member and the second member.

7. A method of manufacturing the battery pack according to claim 1, the method comprising:
housing the electrode body at an interior of a first member that is provided with an opening in at least one of an upper direction, a lower direction or a lateral direction in a cross-section orthogonal to the longitudinal direction and that is included in the cell case, via the opening; and
attaching a second member, which is included in the cell case, to the first member in a state in which the electrode body is housed in the first member, so as to close the opening.
